# EUROPEAN PATENT APPLICATION

(11) **EP 3 430 891 A1**
(43) Date of publication of application: **23.01.2019**
(21) Application number: 17766249.1
(22) Date of filing: 22.02.2017
(51) Int. Cl.: A01K 1/015, B01J 2/20

(54) **METHOD AND DEVICE FOR PRODUCING EXCREMENT TREATMENT MATERIAL**

(30) Priority: 16.03.2016 JP 2016051780
(71) Applicant: Daiki Co., Ltd., Minato-ku Tokyo 107-0052 (JP)
(72) Inventor: YOSHINAGA, Junji, Tokyo 107-0052 (JP)
(74) Representative: Müller-Boré & Partner Patentanwälte PartG mbB
(86) International application number: PCT/JP2017/006497
(87) International publication number: WO 2017/159244

(57) **Abstract**

Provided are a method and an apparatus for manufacturing an excrement treatment material, with which it is possible to obtain an excrement treatment material that contains grains of different lengths in a mixed manner, without executing a mixing step. A manufacturing method includes a granulation step. The granulation step is a step of forming a plurality of granules by performing extrusion granulation on a granulation material using a granulation machine (10). The granulation machine (10) includes a die (12) and a cutter (14). A through hole (13) that allows the granulation material to pass therethrough is formed in the die (12). The cutter (14) cuts the granulation material that has been extruded from the through hole (13) while rotating along the back side of the die (12). In the granulation step, low-speed cutting in which the granulation material is cut while the cutter (14) rotates at a first speed, and high-speed cutting in which the granulation material is cut while the cutter (14) rotates at a second speed that is higher than the first speed are executed.

## Description

### Technical Field

The present invention relates to a method and an apparatus for manufacturing an excrement treatment material.

### Background Art

A conventional excrement treatment material is disclosed in, for example, Patent Document 1. The excrement treatment material is composed of a plurality of cylindrical grains. The plurality of grains include two types of grains that have different lengths. That is, grains (long grains) that have a length that is greater than their diameter, and grains (short grains) that have a length that is less than or equal to their diameter exist in a mixed manner.

### Citation List

### Patent Document

Patent Document 1: JP 2013-247920A

### Summary of Invention

### Technical Problem

The excrement treatment material in which grains of different lengths exist in a mixed manner as described above is conventionally manufactured by separately forming relatively long grains and relatively short grains, and thereafter mixing the relatively long grains and the relatively short grains. However, executing the mixing step has been a factor that adds complexity to the process for manufacturing an excrement treatment material.

The present invention has been made in view of the problem described above, and it is an object of the present invention to provide a method and an apparatus for manufacturing an excrement treatment material, with which it is possible to obtain an excrement treatment material that contains grains of different lengths in a mixed manner, without executing a mixing step.

### Solution to Problem

A method for manufacturing an excrement treatment material according to the present invention includes a granulation step of forming a plurality of granules by performing extrusion granulation on a granulation material using a granulation machine. The granulation machine includes: a die in which a through hole that allows the granulation material to pass therethrough is formed; and a cutter that cuts the granulation material that has been extruded from the through hole while rotating along a back side of the die. In the granulation step, low-speed cutting in which the granulation material is cut while the cutter rotates at a first speed, and high-speed cutting in which the granulation material is cut while the cutter rotates at a second speed that is higher than the first speed are executed.

According to the manufacturing method, the low-speed cutting in which the granulation material is cut while the cutter rotates at a relatively low speed (the first speed), and the high-speed cutting in which the granulation material is cut while the cutter rotates at a relatively high speed (the second speed) are both executed in the granulation step. For this reason, relatively long granules are obtained through the low-speed cutting, and relatively short granules are obtained through the high-speed cutting. Accordingly, it is possible to obtain an excrement treatment material that contains grains of different lengths in a mixed manner, without executing a mixing step after the granulation step.

Also, an apparatus for manufacturing an excrement treatment material according to the present invention includes a granulation machine that forms a plurality of granules by performing extrusion granulation on a granulation material. The granulation machine includes: a die in which a through hole that allows the granulation material to pass therethrough is formed; and a cutter that cuts the granulation material that has been extruded from the through hole while rotating along a back side of the die. The granulation machine executes low-speed cutting in which the granulation material is cut while the cutter rotates at a first speed, and high-speed cutting in which the granulation material is cut while the cutter rotates at a second speed that is higher than the first speed.

With the manufacturing apparatus, the low-speed cutting in which the granulation material is cut while the cutter rotates at a relatively low speed (the first speed), and the high-speed cutting in which the granulation material is cut while the cutter rotates at a relatively high speed (the second speed) are both executed by the granulation machine. For this reason, relatively long granules are obtained through the low-speed cutting, and relatively short granules are obtained through the high-speed cutting. Accordingly, it is possible to obtain an excrement treatment material that contains grains of different lengths in a mixed manner, without executing a mixing step after the granulation by the granulation machine.

### Advantageous Effects of Invention

According to the present invention, it is possible to implement a method and an apparatus for manufacturing an excrement treatment material, with which it is possible to obtain an excrement treatment material that contains grains of different lengths in a mixed manner, without executing a mixing step.

### Brief Description of Drawings

FIG. 1 is a schematic diagram of an excrement treatment material according to an embodiment of the present invention.
FIG. 2 is a perspective view of a grain 30 contained in the excrement treatment material shown in FIG. 1.
FIG. 3 is a cross-sectional view taken along the line III-III shown in FIG. 2.
FIG. 4 is a perspective view of a grain 40 contained in the excrement treatment material shown in FIG. 1.
FIG. 5 is a cross-sectional view taken along the line V-V shown in FIG. 4.
FIG. 6 is a configuration diagram of an apparatus for manufacturing an excrement treatment material according to an embodiment of the present invention.
FIG. 7 is a diagram illustrating a structure of a granulation machine 10 included in the manufacturing apparatus shown in FIG. 6.
FIG. 8 is a diagram illustrating a structure of a coating machine 20 included in the manufacturing apparatus shown in FIG. 6.
FIG. 9 is a diagram illustrating a granulation step of a method for manufacturing an excrement treatment material according to an embodiment of the present invention.
FIG. 10 is a diagram illustrating the granulation step of the method for manufacturing an excrement treatment material according to an embodiment of the present invention.
FIG. 11 is a graph showing an example of temporal changes in the rotation speed of the cutter 14.
FIG. 12 is a graph showing another example of temporal changes in the rotation speed of the cutter 14.

### Description of Embodiments

Hereinafter, an embodiment of the present invention will be described in detail with reference to the drawings. In the description of the drawings, the same elements are given the same reference numerals, and a redundant description will be omitted.

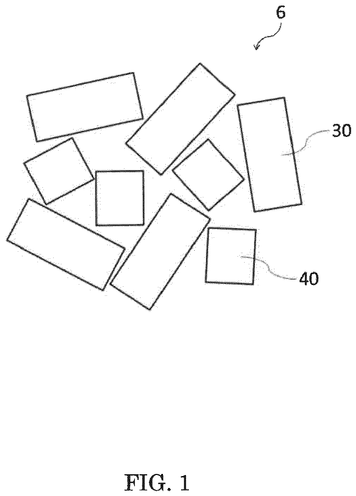

FIG. 1 is a schematic diagram showing an excrement treatment material according to an embodiment of the present invention. An excrement treatment material 6 is an excrement treatment material that is composed of a plurality of grains, and contains grains 30 and grains 40. The grains 30 and 40 have mutually different lengths. That is, the grains 30 are longer in length than the grains 40. In the excrement treatment material 6, grains 30 and 40 that have different lengths are present in a mixed manner. The diameter of the grains 30 and the diameter of the grains 40 are substantially equal. The excrement treatment material 6 is a material used in the disposal of excrement from an animal such as a cat by absorbing the excrement.

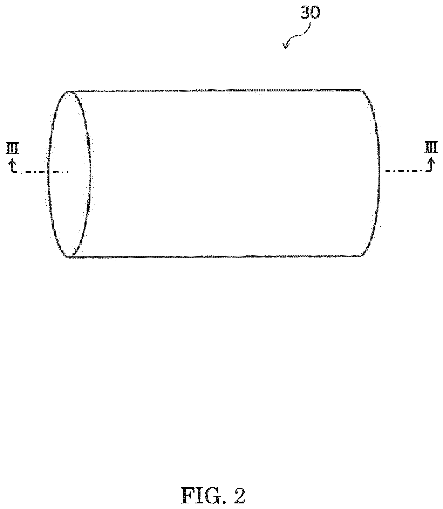

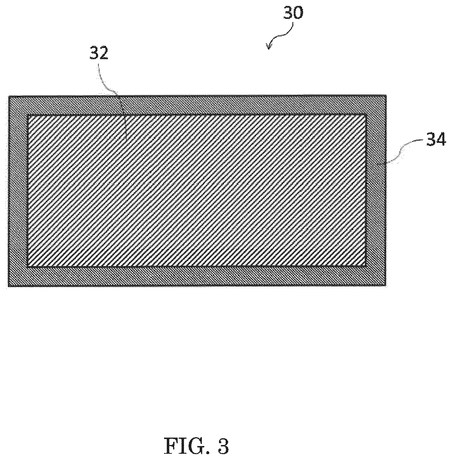

FIG. 2 is a perspective view of a grain 30. FIG. 3 is a cross-sectional view taken along the line III-III shown in FIG. 2. The grain 30 has a substantially cylindrical shape. The grain 30 includes a core portion 32 (granule) and a coating portion 34. The core portion 32 is formed in a substantially cylindrical shape. The core portion 32 is a granule obtained through low-speed cutting performed by a granulation machine 10, which will be described later. It is preferable that the core portion 32 has a mean length value that is greater than the diameter of through holes 13, which will be described later. As used herein, the mean length value of the core portion 32 means the arithmetic mean length of a plurality of core portions 32. The core portion 32 has a function of absorbing and retaining excrement. The core portion 32 preferably contains an organic substance as the main material. As used herein, the main material of the core portion 32 refers to one of the materials constituting the core portion 32 that accounts for the highest proportion by weight in the core portion 32. Papers, used tea leaves, plastics, or soybean refuse, for example, can be used as the organic substance.

Papers refer to a material composed mainly of pulp. Examples of papers include ordinary paper, a vinyl chloride wallpaper classified product (paper obtained by classifying vinyl chloride wallpaper), a fluff pulp, papermaking sludge, pulp sludge, and the like. A disposable diaper classified product (plastic obtained by classifying disposable diapers), for example, can be used as the plastics. The soybean refuse is preferably dried soybean refuse.

The coating portion 34 covers the core portion 32. The coating portion 34 may cover the entire surface of the core portion 32, or may cover only a portion of the surface of the core portion 32. The coating portion 34 has a function of bonding grains 30 and 40 that have absorbed excrement while in use, and clumping them together. The coating portion 34 also preferably contains an organic substance as the main material.

The coating portion 34 contains an adhesive material. As the adhesive material, it is possible to use, for example, starch, CMC (carboxymethyl cellulose), PVA (polyvinyl alcohol), dextrin, or a water-absorbent polymer.

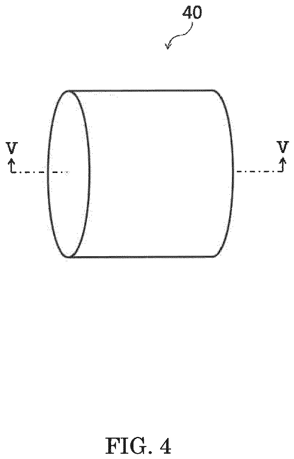

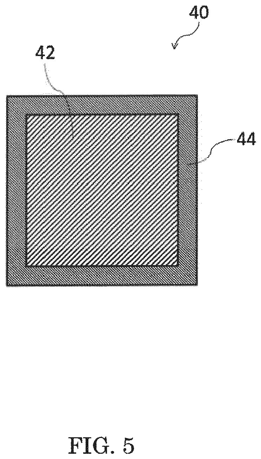

FIG. 4 is a perspective view of a grain 40. FIG. 5 is a cross-sectional view taken along the line V-V shown in FIG. 4. The grain 40 has a substantially cylindrical shape. The grain 40 includes a core portion 42 (granule) and a coating portion 44. The core portion 42 is formed in a substantially cylindrical shape. The core portion 42 is a granule obtained through high-speed cutting performed by the granulation machine 10, which will be described later. It is preferable that the core portion 42 has a mean length value that is less than or equal to the diameter of the through holes 13, which will be described later. Here, the definition of the mean length value of the core portion 42 is the same as the definition of the mean length value of the core portion 32 described above. The mean length value of the core portion 42 is smaller than the mean length value of the core portion 32. The mean length value of the core portion 32 is preferably two times or more the mean length value of the core portion 42. The diameter of the core portion 32 and the diameter of the core portion 42 are substantially equal. The core portion 42 has a function of absorbing and retaining excrement. The core portion 42 is made of the same material as the material of the core portion 32.

The coating portion 44 covers the core portion 42. The coating portion 44 may cover the entire surface of the core portion 42, or may cover only a portion of the surface of the core portion 42. The coating portion 44 has a function of bonding grains 30 and 40 that have absorbed excrement while in use, and clumping them together. The coating portion 44 is made of the same material as the material of the coating portion 34.

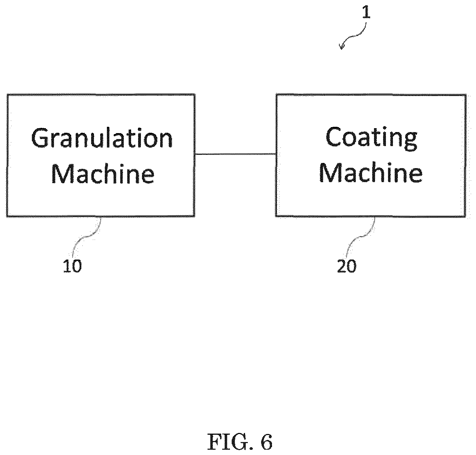

FIG. 6 is a configuration diagram of an apparatus for manufacturing an excrement treatment material according to an embodiment of the present invention. A manufacturing apparatus 1 is an apparatus for manufacturing the above-described excrement treatment material 6. The manufacturing apparatus 1 includes a granulation machine 10 and a coating machine 20.

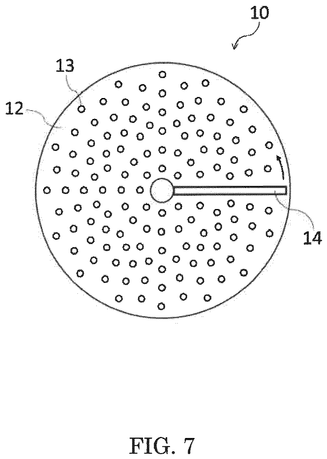

The granulation machine 10 is an extrusion granulation machine that forms a plurality of granules (core portions 32 and 42) by performing extrusion granulation on a granulation material (a material for forming the core portions 32 and 42). As shown in FIG. 7, the granulation machine 10 includes a die 12 and a cutter 14. The diagram shows the back side of the die 12 (the side from which the granulation material is discharged). A plurality of through holes 13 that allow the granulation material to pass therethrough are formed in the die 12. The through holes 13 are distributed substantially over the entire surface of the die 12.

The cutter 14 extends in a radial direction of the die 12 from a center portion of the die 12. The cutter 14 cuts the granulation material that has been extruded from the through holes 13 while rotating along the back side of the die 12. To be specific, the cutter 14 is provided so as to be capable of rotating about the center portion of the die 12 within a plane that is parallel to the back side of the die 12. For this reason, the cutter 14 can pass over all of the through holes 13 formed in the die 12.

The granulation machine 10 is configured to execute low-speed cutting in which the granulation material is cut while the cutter 14 rotates at a first speed, and high-speed cutting in which the granulation material is cut while the cutter 14 rotates at a second speed. The second speed is higher than the first speed. It is preferable that the second speed is two times or more the first speed. In the present embodiment, the granulation machine 10 is configured to alternately execute the low-speed cutting and the high-speed cutting a plurality of times. It is preferable that the execution time for a single instance of each of the low-speed cutting and the high-speed cutting is 1 minute or less. That is, it is preferable that the low-speed cutting and the high-speed cutting are switched at a time interval of 1 minute or less.

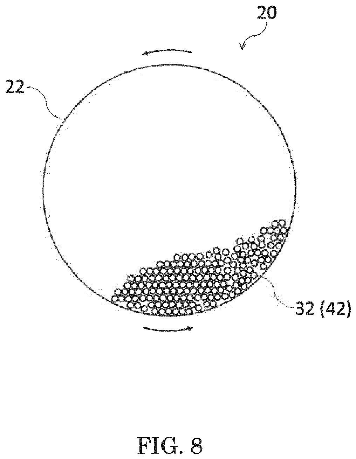

Referring back to FIG. 6, the coating machine 20 is a machine for coating each of the granules (core portions 32 and 42) formed by the granulation machine 10 with a coating material (a material for forming the coating portions 34 and 44). As shown in FIG. 8, the coating machine 20 includes a drum 22 (container). The drum 22 has a substantially circular tube shape, and is provided so as to be capable of rotating. Specifically, the drum 22 is rotatable about its central axis. The central axis of the drum 22 is horizontal. A plurality of core portions 32 and 42 formed by the granulation machine 10 are housed in the drum 22. The coating machine 20 causes the coating material to be attached to the outer surface of each of the core portions 32 and 42 while rotating the drum 22 in which the core portions 32 and 42 are housed.

Next, a method for manufacturing an excrement treatment material according to an embodiment of the present invention will be described in conjunction with the operations of the manufacturing apparatus 1. The manufacturing method includes a granulation step and a coating step. The granulation step is a step of forming a plurality of core portions 32 and 42 by performing extrusion granulation on a granulation material using the granulation machine 10. Prior to granulation, the granulation material is subjected to pre-treatment such as pulverization, kneading, and adding water, as needed.

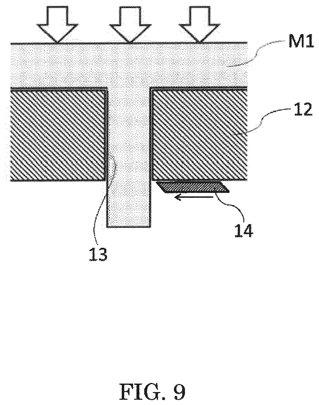

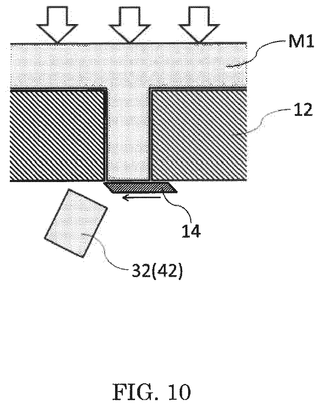

In the granulation step, as shown in FIG. 9, a granulation material M1 supplied on the front side of the die 12 is extruded toward the back side of the die 12 through the through holes 13. The extrusion can be performed by using a known appropriate means. On the back side of the die 12, the cutter 14 continuously rotates while the granulation material M1 is extruded. As a result, as shown in FIG. 10, the granulation material M1 that has been extruded from the through holes 13 is cut by the cutter 14. Cut portions obtained through the cutting in the manner described above are granules (core portions 32 and 42).

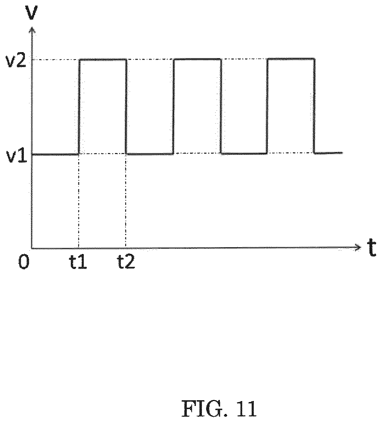

In the granulation step, the low-speed cutting and the high-speed cutting described above are executed. That is, the low-speed cutting and the high-speed cutting are both performed at least one time. In the present embodiment, as shown in FIG. 11, the low-speed cutting and the high-speed cutting are alternately executed a plurality of times. The diagram is a graph showing an example of temporal changes in the rotation speed of the cutter 14.

The rotation speed of the cutter 14 is maintained at v1 (the first speed) during a period from the start of operation of the granulation machine 10 (time 0) to time t1. That is, the low-speed cutting is performed during this period. At time t1, the cutting is switched from the low-speed cutting to the high-speed cutting. At this time, the rotation speed of the cutter 14 is monotonously increased from v1 to v2 (the second speed). Accordingly, the rotation speed of the cutter 14 is constantly within a range that is greater than or equal to v1 and less than or equal to v2 while the cutting is switched from the low-speed cutting to the high-speed cutting. In the graph, the time required for the switching is not taken into account.

During the period from time t1 to time t2, the rotation speed of the cutter 14 is maintained at v2. That is, the high-speed cutting is performed during this period. At time t2, the cutting is switched from the high-speed cutting to the low-speed cutting. At this time, the rotation speed of the cutter 14 is monotonously reduced from v2 to v1. Accordingly, the rotation speed of the cutter 14 is also constantly within a range that is greater than or equal to v1 and less than or equal to v2 while the cutting switches from the high-speed cutting to the low-speed cutting. After that, switching between the low-speed cutting and the high-speed cutting is repeated in the same manner. Through this, a plurality of granules (core portions 32 and 42) are obtained.

The coating step is a step of coating each of the granules formed in the granulation step with a coating material. In the coating step, the core portions 32 and 42 formed in the granulation step are housed in the drum 22 (see FIG. 8), and thereafter the coating material is attached to the outer surface of each of the core portions 32 and 42 while rotating the drum 22. The coating material may be attached by, for example, sprinkling or spraying the coating material. In this way, coating portions 34 and 44 are formed. Then, posttreatment such as sieving and drying is performed as needed. Through the above processing, the excrement treatment material 6 that contains the grains 30 and the grains 40 in a mixed manner is obtained.

Advantageous effects of the present embodiment will be described. In the present embodiment, the low-speed cutting and the high-speed cutting are both performed in the granulation step. In the high-speed cutting, the quantity of the granulation material extruded during one rotation of the cutter 14 is smaller than that in the low-speed cutting. For this reason, relatively long granules (core portions 32) are obtained through the low-speed cutting, and relatively short granules (core portions 42) are obtained through the high-speed cutting. Accordingly, it is possible to obtain the excrement treatment material 6 that contains the grains 30 and 40 of different lengths in a mixed manner, without executing a mixing step after the granulation step.

The excrement treatment material 6 is used by being placed in an animal litter box. In the animal litter box, an animal such as a cat discharges excrement onto the excrement treatment material 6 while the animal is standing directly on the excrement treatment material 6. Accordingly, if gaps between grains that constitute the excrement treatment material 6 are large, the excrement treatment material 6 may significantly sink when an animal walks on it, and the animal may be unstable on its feet. To address this, in the excrement treatment material 6, in addition to the grains 30, the grains 40 that have a length that is smaller than the length of the grains 30 are provided. With this configuration, when the excrement treatment material 6 is placed in the animal litter box, the grains 40 enter the gaps between the grains 30. For this reason, a plurality of grains (grains 30 and 40) can be placed in the animal litter box at a higher density than when the configuration in which the excrement treatment material 6 is composed only of the grains 30 is used. Accordingly, with the excrement treatment material 6, it is possible to suppress sinking while the animal is on the excrement treatment material 6.

In order to make it easy for the grains 40 to enter the gaps between the grains 30, it is advantageous that the length of the grains 40 is sufficiently smaller than the length of the grains 30. From this viewpoint, the rotation speed of the cutter 14 in the high-speed cutting (the second speed) is preferably two times or more the rotation speed of the cutter 14 in the low-speed cutting (the first speed). Also, the granules (core portions 32) obtained through the low-speed cutting preferably have a mean length value that is two times or more the mean length value of the granules (core portions 42) obtained through the high-speed cutting.

The low-speed cutting and the high-speed cutting are alternately executed a plurality of times. In doing so, the core portions 32 and the core portions 42 are alternately obtained, and it is therefore possible to prevent the grains 30 (grains 40) from being excessively unevenly distributed in the manufactured excrement treatment material 6. From the viewpoint of suppressing the uneven distribution of the grains 30 (grains 40), it is preferable that the execution time for a single instance of each of the low-speed cutting and the high-speed cutting is 1 minute or less.

During the coating, the coating material is attached to the outer surface of each of the core portions 32 and 42 while rotating the drum 22 in which the core portions 32 and 42 are housed. By doing so, it is possible to uniformly attach the coating material to the entire outer surface of each of the core portions 32 and 42. Also, as a result of the drum 22 being rotated, the core portions 32 and 42 are agitated, and it is therefore possible to further suppress uneven distribution of the grains 30 (grains 40) in the manufactured excrement treatment material 6.

The present invention is not limited to the embodiment given above, and various modifications can be made. In the embodiment given above, an example has been described in which the rotation speed of the cutter 14 is switched between two stages (at the first or second speed) during the granulation. However, the rotation speed of the cutter 14 may be switched between three stages or more. For example, in the granulation step, in addition to the low-speed cutting and the high-speed cutting, intermediate-speed cutting in which the granulation material is cut while the cutter 14 rotates at a third speed may be executed by the granulation machine 10. The third speed is higher than the first speed and lower than the second speed. It is preferable that the third speed is 1.5 times or more the first speed. Also, the second speed is preferably 1.5 times or more the third speed.

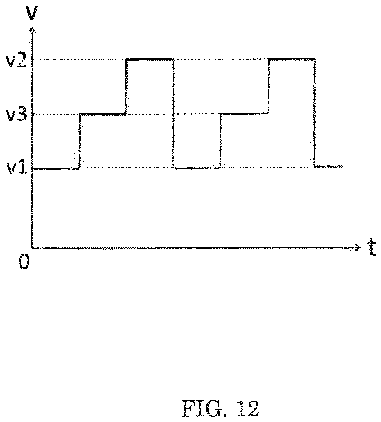

For example, as shown in FIG. 12, the low-speed cutting, the intermediate-speed cutting, and the high-speed cutting are executed in a predetermined order a plurality of times. The diagram is a graph showing an example of temporal changes in the rotation speed of the cutter 14, which is similar to that shown in FIG. 11. The intermediate-speed cutting is executed while the rotation speed of the cutter 14 is maintained at v3 (the third speed). It is preferable that the execution time for a single instance of each of the low-speed cutting, the intermediate-speed cutting, and the high-speed cutting is 1 minute or less. Even in the case where the intermediate-speed cutting is executed in addition to the low-speed cutting and the high-speed cutting as described above, if the low-speed cutting and the high-speed cutting are the focus, it can be said that the low-speed cutting and the high-speed cutting are "alternately executed a plurality of times".

The granules obtained through the intermediate-speed cutting have a mean length value that is smaller than the mean length value of the core portions 32 and is greater than the mean length value of the core portions 42. The granules obtained through the intermediate-speed cutting preferably have a mean length value that is 1.5 times or more the mean length value of the core portions 42. Also, the mean length value of the core portions 32 is preferably 1.5 times or more the mean length value of the granules obtained through the intermediate-speed cutting.

In the embodiment given above, an example has been described in which each grain 30 has a multi-layer structure composed of the core portion 32 and the coating portion 34. However, there is no need to provide the coating portion 34. That is, each grain 30 may have a single-layer structure composed only of the core portion 32. The same applies to the grains 40. In this case, it is unnecessary to provide the coating machine 20, and the coating step is not executed.

In the embodiment given above, an example has been described in which the grains 30 and 40 are water-absorbent grains used in the disposal of excrement by absorbing the excrement. However, the grains 30 and 40 may be water-permeable grains that are used in the disposal of excrement by allowing the excrement to permeate therethrough. There are two types of water-permeable grains: grains that allow excrement to pass through the interior of the grains; and grains that allow excrement to pass through the gaps between the grains. An example of the latter grains is water-repellent grains.

### List of Reference Numerals

- 1: Manufacturing Apparatus
- 6: Excrement Treatment Material
- 10: Granulation Machine
- 12: Die
- 13: Through Hole
- 14: Cutter
- 20: Coating Machine
- 22: Drum (Container)
- 30: Grain
- 32: Core Portion (Granule)
- 34: Coating Portion
- 40: Grain
- 42: Core Portion (Granule)
- 44: Coating Portion

## Claims

1. A method for manufacturing an excrement treatment material comprising:
a granulation step of forming a plurality of granules by performing extrusion granulation on a granulation material using a granulation machine,
wherein the granulation machine includes: a die in which a through hole that allows the granulation material to pass therethrough is formed; and a cutter that cuts the granulation material that has been extruded from the through hole while rotating along a back side of the die, and
in the granulation step, low-speed cutting in which the granulation material is cut while the cutter rotates at a first speed, and high-speed cutting in which the granulation material is cut while the cutter rotates at a second speed that is higher than the first speed are executed.

2. The method for manufacturing an excrement treatment material according to claim 1,
wherein the second speed is two times or more the first speed.

3. The method for manufacturing an excrement treatment material according to claim 1 or 2,
wherein, in the granulation step, the low-speed cutting and the high-speed cutting are alternately executed a plurality of times.

4. The method for manufacturing an excrement treatment material according to claim 3,
wherein an execution time for a single instance of each of the low-speed cutting and the high-speed cutting is 1 minute or less.

5. The method for manufacturing an excrement treatment material according to any one of claims 1 to 4,
wherein the granules that are obtained through the low-speed cutting have a mean length value that is two times or more a mean length value of the granules that are obtained through the high-speed cutting.

6. The method for manufacturing an excrement treatment material according to any one of claims 1 to 5,
wherein the granules that are obtained through the low-speed cutting have a mean length value that is greater than a diameter of the through hole, and
the granules that are obtained through the high-speed cutting have a mean length value that is less than or equal to the diameter of the through hole.

7. The method for manufacturing an excrement treatment material according to any one of claims 1 to 6,
wherein, in the granulation step, intermediate-speed cutting in which the granulation material is cut while the cutter rotates at a third speed that is higher than the first speed and lower than the second speed is executed.

8. The method for manufacturing an excrement treatment material according to claim 7,
wherein the third speed is 1.5 times or more the first speed, and
the second speed is 1.5 times or more the third speed.

9. The method for manufacturing an excrement treatment material according to claim 7 or 8,
wherein, in the granulation step, the low-speed cutting, the intermediate-speed cutting, and the high-speed cutting are executed in a predetermined order a plurality of times.

10. The method for manufacturing an excrement treatment material according to claim 9,
wherein an execution time for a single instance of each of the low-speed cutting, the intermediate-speed cutting, and the high-speed cutting is 1 minute or less.

11. The method for manufacturing an excrement treatment material according to any one of claims 7 to 10,
wherein the granules that are obtained through the intermediate-speed cutting have a mean length value that is 1.5 times or more a mean length value of the granules that are obtained through the high-speed cutting, and
the granules that are obtained through the low-speed cutting have a mean length value that is 1.5 times or more the mean length value of the granules that are obtained through the intermediate-speed cutting.

12. The method for manufacturing an excrement treatment material according to any one of claims 1 to 11, comprising a coating step of coating each of the granules formed in the granulation step with a coating material.

13. The method for manufacturing an excrement treatment material according to claim 12,
wherein, in the coating step, the coating material is attached to an outer surface of each of the granules while rotating a container in which the plurality of granules formed in the granulation step are housed.

14. An apparatus for manufacturing an excrement treatment material comprising:
a granulation machine that forms a plurality of granules by performing extrusion granulation on a granulation material,
the granulation machine including: a die in which a through hole that allows the granulation material to pass therethrough is formed; and a cutter that cuts the granulation material that has been extruded from the through hole while rotating along a back side of the die,
wherein the granulation machine executes low-speed cutting in which the granulation material is cut while the cutter rotates at a first speed, and high-speed cutting in which the granulation material is cut while the cutter rotates at a second speed that is higher than the first speed.

15. The apparatus for manufacturing an excrement treatment material according to claim 14,
wherein the second speed is two times or more the first speed.

16. The apparatus for manufacturing an excrement treatment material according to claim 14 or 15,
wherein the granulation machine alternately executes the low-speed cutting and the high-speed cutting a plurality of times.

17. The apparatus for manufacturing an excrement treatment material according to claim 16,
wherein an execution time for a single instance of each of the low-speed cutting and the high-speed cutting is 1 minute or less.

18. The apparatus for manufacturing an excrement treatment material according to any one of claims 14 to 17,
wherein the granules that are obtained through the low-speed cutting have a mean length value that is two times or more a mean length value of the granules that are obtained through the high-speed cutting.

19. The apparatus for manufacturing an excrement treatment material according to any one of claims 14 to 18,
wherein the granules that are obtained through the low-speed cutting have a mean length value that is greater than a diameter of the through hole, and
the granules that are obtained through the high-speed cutting have a mean length value that is less than or equal to the diameter of the through hole.

20. The apparatus for manufacturing an excrement treatment material according to any one of claims 14 to 19,
wherein the granulation machine executes intermediate-speed cutting in which the granulation material is cut while the cutter rotates at a third speed that is higher than the first speed and lower than the second speed.

21. The apparatus for manufacturing an excrement treatment material according to claim 20,
wherein the third speed is 1.5 times or more the first speed, and
the second speed is 1.5 times or more the third speed.

22. The apparatus for manufacturing an excrement treatment material according to claim 20 or 21,
wherein the granulation machine executes the low-speed cutting, the intermediate-speed cutting, and the high-speed cutting in a predetermined order a plurality of times.

23. The apparatus for manufacturing an excrement treatment material according to claim 22,
wherein an execution time for a single instance of each of the low-speed cutting, the intermediate-speed cutting, and the high-speed cutting is 1 minute or less.

24. The apparatus for manufacturing an excrement treatment material according to any one of claims 20 to 23,
wherein the granules that are obtained through the intermediate-speed cutting have a mean length value that is 1.5 times or more a mean length value of the granules that are obtained through the high-speed cutting, and
the granules that are obtained through the low-speed cutting have a mean length value that is 1.5 times or more the mean length value of the granules that are obtained through the intermediate-speed cutting.

25. The apparatus for manufacturing an excrement treatment material according to any one of claims 14 to 24, comprising a coating machine that coats each of the granules formed by the granulation machine with a coating material.

26. The apparatus for manufacturing an excrement treatment material according to claim 25,
wherein the coating machine includes a container that houses the plurality of granules formed by the granulation machine, and causes the coating material to be attached to an outer surface of each of the granules while rotating the container in which the plurality of granules are housed.
